# EUROPÄISCHE PATENTSCHRIFT

(11) **EP 3 612 746 B1**
(45) Veröffentlichungstag und Bekanntmachung des Hinweises auf die Patenterteilung: **10.03.2021**
(21) Anmeldenummer: 18719491.5
(22) Anmeldetag: 13.04.2018
(51) Int. Cl.: F16D 51/48, F16D 65/22

(54) **SPREIZKEILEINHEIT**
EXPANSION WEDGE UNIT
UNITÉ À COIN D'ÉCARTEMENT

(30) Priorität: 18.04.2017 DE 102017108161
(43) Veröffentlichungstag der Anmeldung: 26.02.2020
(73) Patentinhaber: SAF-HOLLAND GmbH, 63856 Bessenbach (DE)
(72) Erfinder: ZEIS, Tobias, 63856 Bessenbach (DE)
(74) Vertreter: Müller Schupfner & Partner Patent- und Rechtsanwaltspartnerschaft mbB
(86) Internationale Anmeldenummer: PCT/EP2018/059541
(87) Internationale Veröffentlichungsnummer: WO 2018/192855

(56) Entgegenhaltungen:
- EP-A1- 0 501 079
- DE-U1- 9 115 869

## Beschreibung

Die vorliegende Erfindung betrifft eine Spreizkeileinheit, insbesondere eine Spreizkeileinheit zum Einsatz in der Trommelbremse eines Nutzfahrzeuges.

Spreizkeileinheiten sind aus dem Stand der Technik bereits bekannt. Dabei wird ein Spreizkeil verwendet, um, zumeist über kraftübertragende Wälzkörper, einen oder zwei Kolben gegen die Bremsbacken oder Bremskötze einer Bremsanlage zu pressen, welche dann ihrerseits gegen eine Bremsscheibe oder eine Innenseite einer Trommelbremse gepresst werden. Bei Trommelbremsen findet dabei an einer der beiden Bremsbacken der sogenannte Selbstverstärkungseffekt statt, wobei in diesem Fall die auflaufende Bremsbacke, d. h. die Bremsbacke, die zu ihrem Drehpunkt hinweisend mit der tangentialen Reibkraft beaufschlagt wird, über die Spreizkraft hinaus mit einer an die Bremstrommel pressenden Kraft beaufschlagt ist. Dieser Effekt führt dazu, dass die beiden Bremsbacken ungleich starke Gegenkräfte auf den Spreizkeil übertragen, sodass dieser aus seiner ursprünglichen Stellung herausgeschwenkt wird. Um diesem Vorgang Rechnung zu tragen, wurde daher der Spreizkeil einer Trommelbremse meist schwimmend, d. h. mit einem gewissen Freiheitsgrad gegen Verschwenkung in der Spreizkeileinheit angeordnet. Die schwimmende Lagerung des Spreizkeils führt jedoch zu einer Reihe von Nachteilen. Zum einen kann es zum Aufschwingen des Spreizkeiles kommen, was im nichtbelasteten Zustand ein Klappern und einen daraus folgenden Verschleiß der entsprechenden Kontaktflächen des Spreizkeils nach sich zieht. Zum anderen konnte bisher die Bremse aufgrund der relativ ruckartig einsetzenden Selbstverstärkung nicht gut dosiert eingesetzt werden.

DE 91 15 869 U1 betrifft eine Scheibenbremse mit einer Bremsscheibe, die mittels einer axial verschiebbaren Druckplatte in Reibeingriff bringbar ist, sowie einem Betätigungselement, welches eine axiale Verschiebung der Druckplatte bewirkt.

EP 0 501 079 A1 betrifft eine Spreizkeilbremse, deren Spreizkeil in einem Gummielement geführt ist.

Angesichts dieser Nachteile im Stand der Technik ist es Aufgabe der vorliegenden Erfindung, eine bessere Spreizkeileinheit bereit zu stellen, welche insbesondere eine bessere Dosierbarkeit der Bremswirkung einer Bremsanlage erreicht und welche insbesondere Klappern und daraus folgenden Verschleiß im Bereich der Spreizkeileinheit minimiert.

Diese Aufgabe wird gelöst mit einer Spreizkeileinheit gemäß Anspruch 1. Weitere Vorteile und Merkmale der vorliegenden Erfindung ergeben sich aus den abhängigen Ansprüchen.

Erfindungsgemäß umfasst die Spreizkeileinheit ein Gehäuse, einen Spreizkeil und eine Führungseinheit, wobei die Führungseinheit und der Spreizkeil in einem ersten Gehäusebereich des Gehäuses angeordnet oder anordenbar sind, wobei sich die Führungseinheit mit einem ersten Führungsabschnitt an einer Wand des ersten Gehäuses derart abstützt, dass sie gegen Verlagerung und Verschwenken relativ zum Gehäuse quer zu einer Betätigungsachse gesichert ist, wobei der Spreizkeil in einem zweiten Führungsabschnitt der Führungseinheit geführt ist, wobei zwischen dem ersten Führungsabschnitt und dem zweiten Führungsabschnitt ein Rückstellbereich vorgesehen ist, welcher eine gefederte bzw. elastisch gelagerte bzw. rückstellfähig gelagerte Relativbewegung zwischen dem ersten Führungsabschnitt und dem zweiten Führungsabschnitt erlaubt. Der Spreizkeil ist vorzugsweise ein sich länglich erstreckender Körper oder ein Hintereinanderschalten mehrerer, sich länglich hintereinander entlang einer Betätigungsachse aufreihender Körper, welche insbesondere zur Kraftübertragung zwischen einem Bremszylinder, vorzugsweise einem pneumatisch betätigtem Membranzylinder, und einer in einer Trommelbremse vorgesehenen Kolbenanordnung, welche der Spreizung zweier Bremsbacken dient, ausgelegt ist. Der Spreizkeil weist dabei an seinem ersten distalen Ende vorzugsweise einen keilförmigen Abschnitt auf, welcher besonders bevorzugt mit Wälzkörpern interagiert, die wiederum eine Spreizkraft vom Spreizkeil auf die jeweiligen Kolbenelemente übertragen. Die Führungseinheit ist dabei definiert als Element oder Baugruppe verschiedener Elemente, welche insbesondere eine Führung des Spreizkeils und eine Abstützung des Spreizkeils gegen Verlagerung quer zu einer Betätigungsachse bereitstellen. Während von der Führungseinheit abgestützt, ist der Spreizkeil relativ zur Führungseinheit parallel oder längs der Betätigungsachse verlagerbar. Wesentliches Element der Führungseinheit ist dabei ein Rückstellbereich, welcher eine elastisch gefederte bzw. rückstellfähige Abstützung des Spreizkeils gegenüber dem Gehäuse, und insbesondere dem ersten Gehäusebereich erlaubt. Der erste Gehäusebereich ist vorzugsweise als Aussparung, besonders bevorzugt als zylindrische Aussparung, in dem Gehäuse der Spreizkeileinheit ausgebildet. In einer besonders bevorzugten Ausführungsform kann die Führungseinheit insgesamt aus nur einem Rückstellbereich aufgebaut sein, wobei mit anderen Worten der Rückstellbereich die Führungseinheit bildet. Letzteres ist beispielsweise in dem Fall vorgesehen, dass der Rückstellbereich ein Federelement ist, welches zum einen die Abfederung von Bewegungen des Spreizkeils quer zur Betätigungsachse übernimmt und zum anderen aber gleichzeitig auch den Spreizkeil unmittelbar führt und gegenüber dem Gehäuse abstützt. Dieses Abstützten kann dabei unmittelbar erfolgen oder mittelbar. Durch die gefederte Abstützung des Spreizkeils relativ zum Gehäuse ist insbesondere ein Verschwenken des Spreizkeiles quer zur Betätigungsachse weiterhin möglich, wobei je nach Stellung des Spreizkeils entlang der Betätigungsachse eine entsprechend anpassbare elastische Rückstellkraft auf den Spreizkeil wirkt, die diesen wieder in eine parallel zur Betätigungsachse definierte Stellung treibt. Auf diese Weise ist es somit möglich, den Spreizkeil weiterhin um eine senkrecht zur Betätigungsachse verlaufende Drehachse zu schwenken, diese Schwenkbewegung führt jedoch stets zu einer gewissen Rückstellkraft, welche dafür sorgt, dass insbesondere ein freies Schwingen des Spreizkeils in der Spreizkeileinheit wirksam verhindert werden kann. Als gefederte Lagerung des Spreizkeils im Sinne der vorliegenden Erfindung wird dabei insbesondere eine über eine elastische Verformung des zumeist metallischen Herstellungsmaterials des Spreizkeils hinausgehende Erzeugung einer Rückstellkraft an speziell dafür vorgesehenen und insbesondere mit deutlich geringeren Federkonstanten ausgestatteten Rückstellelementen, wie beispielsweise Gummibuchsen, Spiralfedern, Radialfedern oder entsprechenden Federelementen definiert. Mit anderen Worten ist als gefederte Abstützung des Spreizkeils eine Federkonstante vorgesehen, welche deutlich kleiner ist als der E-Modul des Herstellungswerkstoffes des Gehäuses der Spreizkeileinheit oder des Spreizkeils selbst. Der Rückstellbereich ist somit als der Bereich der Führungseinheit definiert, in welchem besonders auf elastische Verformung optimiertes Material angeordnet ist, welches einen besonders hohen elastischen Verformungsanteil zulässt und insbesondere große Federwege erlaubt, ohne dass plastische Verformung des Materials eintritt und somit eine dauerhafte Schädigung des Rückstellbereiches stets mit ausreichender Sicherheit vermieden werden kann.

Besonders bevorzugt ist der Spreizkeil im zweiten Führungsabschnitt gleitend und längs der Betätigungsachse verlagerbar angeordnet bzw. gehalten. In diesem Zusammenhang ist zwischen dem Spreizkeil und dem zweiten Führungsabschnitt vorzugsweise eine Spielpassung vorgesehen, welche jedoch vorzugsweise im Bereich zwischen 0,03 und 1,5 mm gehalten ist. Dies erlaubt eine möglichst widerstandsarme Verlagerung des Spreizkeils längs der Betätigungsachse relativ zur Führungseinheit und gleichzeitig eine möglichst enge Führung und Abstützung des Spreizkeils gegen Verlagerung quer zur Betätigungsachse.

Ferner bevorzugt federt der Rückstellbereich ein Verlagern des Spreizkeils quer zur Betätigungsachse in einer ersten Hauptrichtung und/oder in einer zweiten Hauptrichtung mit einer geringeren Federkonstante ab als in den übrigen quer zur Betätigungsachse stehenden Richtungen. Bevorzugt weist der Rückstellbereich somit entlang einer Umfangslinie um die Betätigungsachse verschiedene Federsteifigkeiten oder Funktionen für die Federkonstante auf. Die erste und die zweite Hauptrichtung sind dabei vorzugsweise die Richtungen entlang derer die Kolbenelemente vom Spreizkeil mit einer Kraft beaufschlagt werden, wobei insbesondere in diesen Richtungen eine Verschwenkung des Spreizkeils bei Vorliegen der sogenannten Selbstverstärkung stattfindet und eine entsprechende Abfederung dieser Bewegung bei trotzdem noch ausreichendem Freiheitsgrad für eine Verschwenkung des Spreizkeils gegeben sein muss. Es versteht sich dabei, dass die erste und die zweite Hauptrichtung im Wesentlichen keine mathematische Gerade darstellen, sondern dass die verringerte Federsteifigkeit insbesondere bevorzugt einem Winkelbereich von vorzugsweise 5-20 Grad quer zur Betätigungsachse vorliegen soll, wobei in den übrigen Richtungen, welche vorzugsweise senkrecht zur ersten und/oder zweiten Hauptachse stehen, eine andere, vorzugsweise höhere Federsteifigkeit durch den Rückstellbereich definiert sein soll. Auf diese Weise wird somit der Spreizkeil in Richtung der ersten oder zweiten Hauptrichtung leichter, d. h. gegen weniger elastischen Widerstand, verschwenkbar sein, während in den übrigen Richtungen der Spreizkeil durch die Führungseinheit relativ straff geführt ist. Es lässt sich auf diese Weise die Präzision der Bewegung des Spreizkeils deutlich verbessern und insbesondere das Ansprechverhalten der Bremse kann auf diese Weise optimiert werden. Auch werden klappernde Schwenkbewegungen des Spreizkeils auf ein Minimum reduziert, sodass insbesondere Materialschäden durch aneinander schlagende Abschnitte der Spreizkeileinheit verhindert werden können.

Weiterhin bevorzugt ist die Federsteifigkeit entlang der ersten Hauptrichtung und/oder der zweiten Hauptrichtung kleiner als die Hälfte, vorzugsweise kleiner als ein 0,8-faches der Federsteifigkeit der Materialbereiche, welche den Spreizkeil bei Verlagerung quer zur Betätigungsachse im Bereich der Führungseinheit quer zur ersten und zur zweiten Hauptrichtung stehenden Richtungen mit einer Gegenkraft beaufschlagen. Mit anderen Worten ist somit die Federsteifigkeit entlang der ersten und/oder der zweiten Hauptrichtung geringer als die Federsteifigkeit in den übrigen Richtungen quer zur Betätigungsachse, wobei insbesondere ein Verhältnis von 0,5 der jeweiligen Federsteifigkeiten zueinander nicht überschritten werden soll. Auf diese Weise ist in den Schwenkrichtungen, in welchen der Spreizkeil nicht verschwenkbar sein muss, um eine Selbstverstärkung der auflaufenden Trommelbremsbacke zu erlauben, eine straffere Führung, d. h. eine Führung mit deutlich höherer Federkonstante vorgesehen. In einer besonders bevorzugten Ausführungsform kann in den von der ersten Hauptrichtung und der zweiten Hauptrichtung abweichenden Richtungen an Stelle des Rückstellbereiches auch eine Führung des Spreizkeiles durch eine zuvor beschriebene Spielpassung der Führungseinheit mit dem Spreizkeil vorgesehen sein, wobei insbesondere nur wenig elastisch verformbares Material wie Metall oder steifer Kunststoff für die Führung des Spreizkeils an der Führungseinheit oder am Gehäuse vorgesehen sein kann.

Erfindungsgemäß weist der Rückstellbereich ein Gummielement auf. Mit anderen Worten wird die elastische Abfederung von Bewegungen des Spreizkeils quer zur Betätigungsachse durch ein Gummimaterial bewirkt. Gummi als Rückstellelement hat den Vorteil, dass zum einen eine besonders hohe Federrate erreicht werden kann und zum anderen bei elastischer Rückstellung auch eine Dämpfungsfunktion gegen bestimmte, hochfrequente Schwingungen erreicht werden kann. Durch den Einsatz eines Gummielements kann somit effektiv das Klappern des Spreizkeiles aufgrund von Schwingungen quer zur Betätigungsachse deutlich verringert werden.

Weiterhin bevorzugt weist das Gummielement vorzugsweise Aussparungen auf, welche die Federsteifigkeit in der ersten Hauptrichtung und/oder in der zweiten Hauptrichtung verringern. Durch die Aussparungen kann insbesondere die zuvor beschriebene verringerte Federsteifigkeit bei Verlagerung des Spreizkeils parallel oder längs einer ersten Hauptrichtung und/oder einer zweiten Hauptrichtung erreicht werden. Aussparungen im Material des Gummielements sorgen insbesondere dafür, dass bei Zusammenpressen des Gummielements entlang bzw. parallel zur ersten Hauptrichtung lediglich Materialstege des Gummielements die entsprechende elastische Rückstellkraft aufbringen. Insbesondere bevorzugt lässt sich durch das Einbringungen von Aussparungen auch eine Federkennlinie mit unterschiedlichen Federsteifigkeitsbereichen erreichen. Dies ist insbesondere dann der Fall, wenn die beiden gegenüberliegenden Flanken einer Aussparung bei Zusammenpressen des Gummielements schließlich aneinander kontaktieren, sodass die Federsteifigkeit bei weiterer Verformung des Federelements sprunghaft ansteigt. Besonders bevorzugt ist die Federkennlinie des Rückstellbereiches konstant. Mit anderen Worten weist der Rückstellbereich unabhängig von seinem Verformungszustand bevorzugt stets ungefähr die gleiche Zunahme der Rückstellkraft bei gleicher Zunahme der elastischen Verformung auf. Insbesondere in Kombination mit der Tatsache, dass der Hebelarm einer durch die Rückstellung im Rückstellbereich aufgebrachten Kraft bei Betätigen der Bremse und Verlagern des Spreizkeils von der nichtbetätigenden Stellung in die Stellung, in welcher die Bremse maximal betätigt ist, kleiner wird, wodurch die am ersten distalen Ende des Spreizkeiles anliegenden Kraft ebenfalls geringer wird, kann somit eine optimale Führung des Spreizkeils durch die Führungseinheit entlang des gesamten Verlagerungsbereiches des Spreizkeiles längs oder parallel zur Betätigungsachse erreicht werden. Eine progressive Kennlinie hat den Vorteil, eine bessere Kontrollierbarkeit der Bremse bei schnellen Betätigungen mit hohem Bremsdruck erreicht wird, da die Selbstverstärkung abgedämpft wird und keine schlagartige Verstärkung der Bremskraft auftritt. Bei niedrigeren Bremsdrücken hingegen wird die zentrale Position und somit die gerade Ausfahrrichtung des Keils im Betätigungsmoment schneller verlassen als bei einer linearen und/oder degressiven Kennlinie. Somit neigt die Bremse zu stärkerem und aggressiverem Verhalten bei niedrigen Bremsdrücken. Eine degressive Kennlinie hat im Gegensatz hierzu den Vorteil, dass bei niedrigen Bremsdrücken die zentrierte Position des Keils besser gehalten wird als bei einer progressiven Kennlinie, was zu Folge hat, dass die Bremse in diesem Bereich einen geringeren Hang zur Selbstverstärkung hat und die Bremse bei kleineren Bremsdrücken besser zu dosieren ist. Bei schnellen Bremsungen mit hohem Bremsdruck wird die Selbstverstärkung dabei zunehmend weniger gedämpft als bei geringen Drücken. Eine degressive Kennlinie lässt sich durch Verwendung von Kunststoff oder z.B. auch Tellerfedern im Rückstellbereich erreichen. Bevorzugt wird eine Gummi-Metall-Hülse verwendet, die den Gummi im Fall der Selbstverstärkung vollständig oder zum größten Teil auf Zug beansprucht.

Erfindungsgemäß ist das Gummielement hohlzylinderförmig ausgebildet, wobei der erste Führungsabschnitt die äußere Mantelfläche des Gummielements ist und wobei der zweite Führungsabschnitt die innere Mantelfläche des Gummielements ist. In ihrer einfachsten Ausführungsform besteht die Führungseinheit somit lediglich aus einem Gummielement, welches hohlkörperförmig ausgeführt ist und welches gleichzeitig sowohl den ersten und den zweiten Führungsabschnitt beinhaltet und auch den Rückstellbereich bereitstellt. Dabei ist insbesondere die innere, vorzugsweise zylindrische Fläche des ringförmig bzw. hohlzylinderförmig ausgebildeten Gummielements als Gleitfläche an dem Spreizkeil angeordnet. Weiterhin ist vorzugsweise das Gummielement mit seiner äußeren, vorzugsweise zylindrischen Mantelfläche gegen die Innenwand des ersten Gehäusebereiches abgestützt. Besonders bevorzugt kann dabei das Gummielement unter Vorspannung in das Gehäuse eingedrückt sein, wobei dies dort reib- und kraftschlüssig erhalten ist. Diese Ausführungsform zeichnet sich durch eine besonders leichte und einfache Herstellung aus, wobei das Gummielement als einfaches Verschleißteil ausgebildet sein kann, was in periodischen Abständen aus der Spreizkeileinheit entnommen wird und durch ein neues Gummielement ersetzt wird.

In einer nicht erfindungsgemäßen Ausführungsform ist zumindest der erste Führungsabschnitt als Metallhülse ausgebildet. Die Ausbildung des ersten Führungsabschnittes als Metallhülse hat den Vorteil, dass diese Metallhülse auch zur Lagerung und Führung von Rückstellelementen, die nicht aus Gummi ausgebildet sind, geeignet ist. Darüber hinaus kann vorzugsweise auch der zweite Führungsabschnitt als Metallhülse ausgebildet sein, welche innerhalb oder bereichsweise innerhalb der ersten Metallhülse angeordnet ist, welche den ersten Führungsabschnitt bildet. Das Vorsehen von Metallhülsen sowohl für den ersten, als auch für den zweiten Führungsabschnitt sorgt für eine besonders verschleißarme Kraftübertragung zwischen dem Gehäuse und der Führungseinheit sowie zwischen dem Spreizkeil und der Führungseinheit. Gleichzeitig können die Metallhülsen derart ausgebildet sein, dass sie nur in ausgewählten Schwenkrichtungen zueinander schwenkbar sind und in jeweils anderen Schwenkrichtungen eine relativ straffe Führung der inneren Metallhülse und somit dem Spreizkeil gegenüber der äußeren Metallhülse und somit dem Gehäuse erlauben. Dies ermöglicht mit Vorteil, eine gefederte Führung des Spreizkeils nur in ausgewählten Richtungen, wie beispielsweise der ersten und der zweiten Hauptrichtung, zuzulassen.

In einer nicht erfindungsgemäßen Ausführungsform weist der Rückstellbereich eine Spiralfeder auf, wobei die Spiralfeder längs der Betätigungsachse unterschiedliche Durchmesser, bezogen auf die Betätigungsachse, aufweist, wobei zumindest ein Bereich mit minimalem Durchmesser den Spreizkeil quer zur Betätigungsachse abstützt, wobei zumindest ein Bereich mit maximalem Durchmesser die Spiralfeder am ersten Gehäusebereich abstützt. Insbesondere bevorzugt ist somit eine Spiralfeder vorgesehen, welche Windungen mit einem kleinen Windungsdurchmesser und Windungen mit einem vergleichsweise großen Windungsdurchmesser aufweist. Dabei ist es möglich, dass die Windungsbereiche mit kleinem Durchmesser mit einer Spielpassung möglichst eng am Spreizkeil anliegen und diesen gegen Verlagerung oder Verschwenken quer zur Betätigungsachse sichern. Gleichzeitig kann bevorzugt der Bereich mit Windungen mit dem größten Durchmesser der Spiralfeder die Abstützung der Spiralfeder gegenüber dem ersten Gehäusebereich dem Gehäuse gewährleisten. In einer besonders bevorzugten Ausführungsform ist die Spiralfeder dabei sowohl das Element, welches als Führungseinheit im Sinne der vorliegenden Erfindung und gleichzeitig als Rückstellbereich fungiert, und gleichzeitig ist die Spiralfeder auch die Feder, welche eine Rückstellung des Spreizkeils parallel zur Betätigungsachse herbeiführt. Die Anzahl der Bauteile der Spreizkeileinheit kann mit dieser bevorzugten Ausführungsform stark reduziert werden.

In einer nicht erfindungsgemäßen Ausführungsformstützt sich die Spiralfeder an ihrem ersten Ende an einem Anschlag, des Gehäuses gegen Verlagerung in einer ersten Richtung parallel zur Betätigungsachse ab, wobei die Spiralfeder an ihrem zweiten Ende mittelbar oder unmittelbar am Spreizkeil angreift, um eine parallel zur Betätigungsachse wirkende Rückstellkraft an diesen zu übertragen. In dieser bevorzugten Ausführungsform ist die Spiralfeder somit zum einen als Führungseinheit mit Rückstellbereich ausgelegt und zum anderen gewährleistet sie die Rückstellung des Spreizkeils von der Position entlang der Betätigungsachse, in welcher der Spreizkeil die Kolbenelemente auseinander drückt und eine Bremswirkung erzielt hin zu der Position, in welcher der Spreizkeil außer Eingriff mit den Kolbenelementen ist. Hierfür weist die Spiralfeder zusätzlich zu dem zweiten Führungsbereich an ihrer Innenseite bzw. den Windungen mit geringstem Durchmesser einen Eingriffsbereich mit dem Gehäuse, und einen zweiten Eingriffsbereich zur Kraftübertragung an den Spreizkeil für parallel zur Betätigungsachse verlaufende Kräfte. Besonders bevorzugt ist dafür am Spreizkeil eine weitere, tellerartige Kraftübertragungsgeometrie vorgesehen, an welcher sich die Spiralfeder mit ihrem zweiten distalen Ende abstützt. Der Anschlag des Gehäuses ist vorzugsweise ein nach quer zur Betätigungsachse innenragender Vorsprung mit einer entsprechenden Anschlagfläche für die Spiralfeder ausgebildet.

In einer nicht erfindungsgemäßen Ausführungsform weist der Rückstellbereich zumindest ein erstes Federelement auf, wobei das erste Federelement zwischen dem als Metallhülse ausgebildeten ersten Führungsabschnitt und dem als Metallhülse ausgebildeten zweiten Führungsabschnitt angeordnet ist und bei Auslenkung des Spreizkeils quer zur Betätigungsachse eine Rückstellkraft zwischen dem ersten und dem zweiten Führungsabschnitt etabliert. Es sind somit vorzugsweise alternativ zu einem als Spiralfeder ausgebildeten Rückstellbereich ein oder mehrere erste Federelemente vorgesehen, welche vorzugsweise hauptsächlich oder ausschließlich quer zur Betätigungsachse durch elastische Verformung eine Rückstellkraft auf den zweiten Führungsabschnitt oder auf den Spreizkeil unmittelbar übertragen. Besonders bevorzugt können dabei zwischen dem als Metall-hülse ausgebildeten ersten Führungsabschnitt und dem als Metallhülse ausgebildeten zweiten Führungsabschnitt eine Reihe von kleinen Spiralfedern gleichmäßig und in radialer Richtung angeordnet über dem Umfang verteilt und der Vorspannung eingesetzt sein, welche eine gefederte Bewegung des zweiten Führungsabschnitts relativ zum ersten Führungsabschnitt zulassen. Besonders bevorzugt erzeugt das eine erste Federelement oder die Vielzahl von ersten Federelementen lediglich eine Rückstellkraft, die quer zur Betätigungsachse wirkt. Auf diese Weise kann eine genaue Dosierung der auf den zweiten Führungsabschnitt wirkenden Rückstellkraft erreicht werden, wobei diese insbesondere unabhängig vom Betriebszustand der Bremse und von der jeweiligen Position des Spreizkeiles entlang der Betätigungsachse ist.

Darüber hinaus bevorzugt ist im ersten Gehäusebereich ein zweites Federelement angeordnet, wobei sich das zweite Federelement an seinem ersten Ende an einem Anschlag des Gehäuses gegen Verlagerung in einer ersten Richtung parallel zur Betätigungsachse abstützt und wobei das zweite Federelement an seinem zweiten Ende mittelbar oder unmittelbar am Spreizkeil angreift, um eine parallel zur Betätigungsachse wirkende Rückstellkraft auf diesen zu übertragen. In dieser Ausführungsform übernimmt das zweite Federelement somit die Rückstellung des Spreizkeils von der Stellung entlang der Betätigungsachse, in welcher der Spreizkeil die Kolbenelemente der Bremsanlage auseinanderdrückt hin zu einer Stellung, in welcher der Spreizkeil maximal aus dem Bereich zwischen den Kolbenelementen ausgefahren ist. Wie bereits zuvor für die Spiralfeder beschrieben, ist das zweite Federelement dabei in Eingriff mit einem flanschartigen Bauteil, welches die Kraftübertragung an den Spreizkeil parallel zur Betätigungsachse ermöglicht.

In einer nicht erfindungsgemäßen Ausführungsform ist das erste Federelement als Miniblockfeder, oder als Kegelfeder oder als "Crest-to-Crest"-Feder ausgebildet. Die genannten Federtypen sind insbesondere als kompakte Federelemente ausgebildet, welche bei maximal eingefederter Stellung einen minimalen Bauraumbedarf haben und trotzdem über einen vergleichsweise großen Federweg verfügen. Insbesondere können diese ersten Federelemente im Vergleich zu einer gewöhnlichen Spiralfeder deutlich größere Wegstrecken zwischen dem vollständig ausgefederten und dem vollständig eingefederten Zustand mit einer Rückstellkraft versehen. Auf diese Weise ist es möglich, eines oder einer Vielzahl dieser besonders kompakt ausgebildeten Federelemente zwischen dem ersten Führungsabschnitt und dem zweiten Führungsabschnitt anzuordnen und somit mit eine besonders gleichmäßige Verteilung der Federkraft radial zur Betätigungsachse zu erreichen. Als weiterhin bevorzugtes, kompaktes Federelement gelangt mit Vorteil eine "Marcel Radialfeder" der Firma Smalley zum Einsatz, welche bei besonders niedrigem Gewicht eine radiale Rückstellung und Führung des Spreizkeiles ermöglicht. Die zuvor beschriebenen besonders kompakten und längs einer Axialrichtung federnden Federelemente können bevorzugt auf für die Rückstellung des Spreizkeils in seine nicht betätigte Stellung verwendet werden, um auch hier den durch die Führungseinheit begrenzten Bauraum besonders gut auszunutzen.

In einer besonders bevorzugten Ausführungsform weist die Führungseinheit einen Dämpfungsteil auf, welcher ausgelegt ist, Verlagerungsbewegungen des Spreizkeils quer zur Betätigungsachse zu dämpfen. In einer ersten bevorzugten Ausführungsform fungiert als Dämpfteil das Gummielement, welches gleichzeitig auch als Rückstellteil ausgelegt ist. In einer weiteren bevorzugten Ausführungsform kann als Dämpfungsteil auch ein Hydrolager zum Einsatz gelangen, welches insbesondere in Kombination mit aus Gummi ausgebildeten Materialwänden ebenfalls die Funktionen des Rückstellteils und des Dämpfungsteils in ein und demselben, vorzugsweise buchsenförmig ausgebildeten Bauteil, gewährleistet. Ein Hydrolager basiert dabei auf dem Prinzip, dass in verschiedenen Kammern angeordnete Flüssigkeit über jeweils vorgesehene engste Querschnitte von einer in eine andere Kammer fließt, wenn sich die Außengeometrie und somit die Innengeometrie des Hydrolagers ändert. Durch die Viskosität der als Dämpfungsfluid eingesetzten Flüssigkeit tritt dabei Fluidreibung auf, welche die Verlagerungsbewegung abdämpft. Insbesondere bevorzugt weist das Hydrolager im vorliegenden Fall sowohl elastisch ausgebildete Wände auf, welche ein elastische Rückstellkraft zwischen dem ersten Führungsabschnitt und dem zweiten Führungsabschnitt etablieren. In einer ersten bevorzugten Ausführungsform kommt als Dämpfungsfluid ein hochtemperaturfestes Öl zum Einsatz, welches zum einen eine ausreichend hohe Temperaturfestigkeit, das heißt insbesondere einen Flammpunkt oberhalb von 300°C bis bevorzugt 400°C aufweist. In einer alternativ bevorzugten Ausführungsform kann als Dämpfungsfluid eine magnetorheologische Flüssigkeit eingesetzt werden, deren Viskosität durch Anlegen einer bestimmten Spannung entsprechend angepasst werden kann, wodurch der durch das Hydrolager besonders optimal gedämpfte Geschwindigkeit bzw. Schwingungsfrequenzbereich je nach Einsatzbedingung der Spreizkeileinheit angepasst werden kann.

Besonders bevorzugt ist der erste Gehäusebereich im Wesentlichen hohlzylinderförmig ausgeführt. Eine hohlzylinderförmige Ausgestaltung des ersten Gehäusebereiches lässt sich besonders einfach herstellen und es kann weiterhin erreicht werden, dass die höchste Kompatibilität des ersten Gehäusebereiches mit verschiedenen im Gehäusebereich anzuordnenden Bauteilen wie zweite Federelemente, Führungseinheit und Spreizkeil erreicht werden kann.

Weiterhin bevorzugt weist das Gehäuse einen zweiten Gehäusebereich auf, in welchem zwei Kolbenelemente quer zur Betätigungsachse verlagerbar und geführt angeordnet sind, wobei die Kolbenelemente ausgelegt sind, eine Kraft vom Spreizkeil an je ein Bremsbackenelement zu übertragen. Insbesondere bevorzugt sind dabei der erste Gehäusebereich und der zweite Gehäusebereich einstückig miteinander, vorzugsweise als gemeinsames Gußteil ausgeführt. Die Ausbildung des Gehäuses als ein Gußteil hat den Vorteil, dass zum einen die Fertigungskosten minimiert werden können und zum anderen, dass Materialgefüge, insbesondere die Materialfestigkeit über den gesamten Bereich des Gehäuses, sowohl im ersten, als auch im zweiten Gehäusebereich konstant gehalten werden kann. Der Spreizkeil erstreckt sich dabei vorzugsweise vom ersten Gehäusebereich in den zweiten Gehäusebereich hinein, sodass er die im zweiten Gehäusebereich angeordneten Kolbenelemente mit einer Kraft, welche quer, vorzugsweise senkrecht, zur Betätigungsachse verläuft, beaufschlagen kann.

Weitere Vorteile und Merkmale der vorliegenden Erfindung ergeben sich aus der nachfolgenden Beschreibung in Bezug auf die beigefügten Figuren. Es versteht sich, dass einzelne nur in einer der Figuren dargestellten Merkmale auch in Ausführungsformen anderer Figuren zum Einsatz gelangen können, sofern dies nicht explizit ausgeschlossen wurde, oder sich aufgrund technischer Gegebenheiten verbietet.
- Fig. 1, Fig. 2: - Schnittansichten einer ersten bevorzugten Ausführungsform der erfindungsgemäßen Spreizkeileinheit.
- Fig. 3, Fig. 4: - Schnittansichten einer weiteren bevorzugten Ausführungsform der erfindungsgemäßen Spreizkeileinheit,
- Fig. 5 bis 9: Ansichten bevorzugter Ausführungsformen der Führungseinheit.

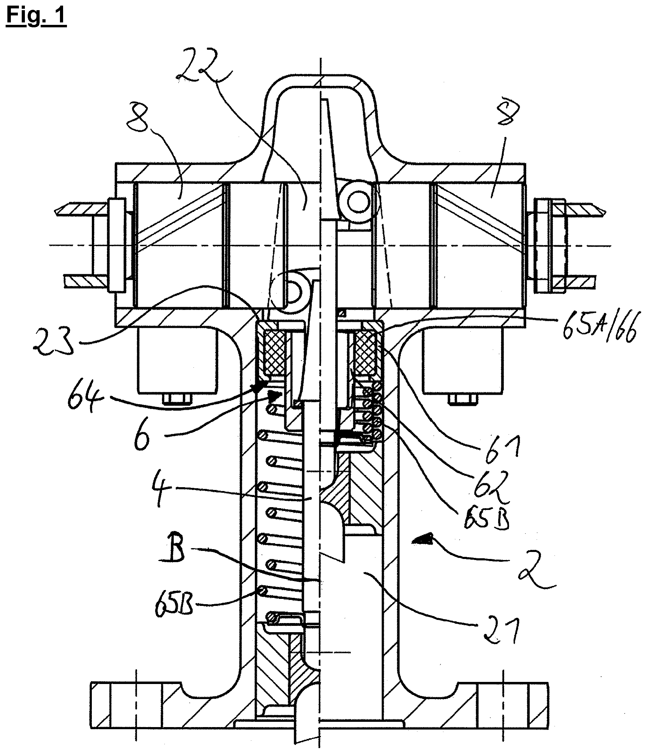

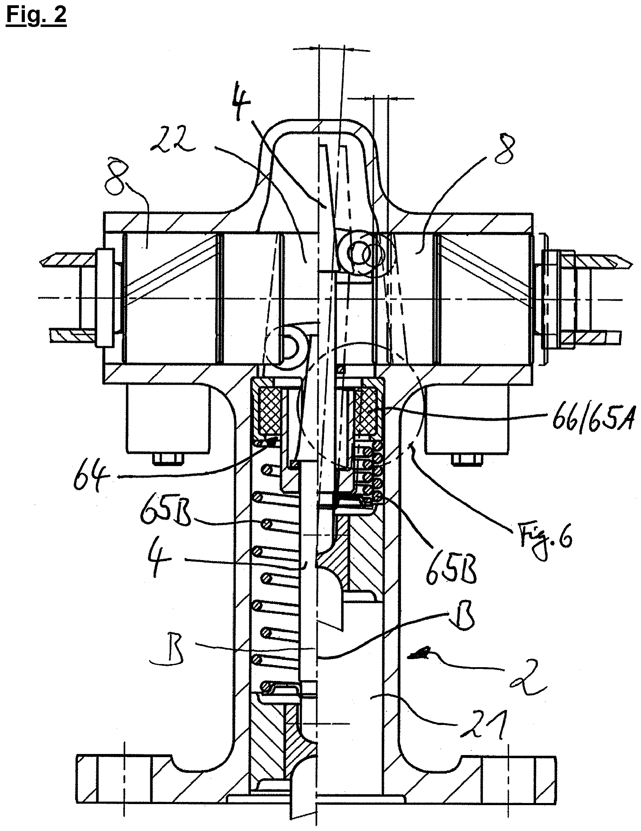

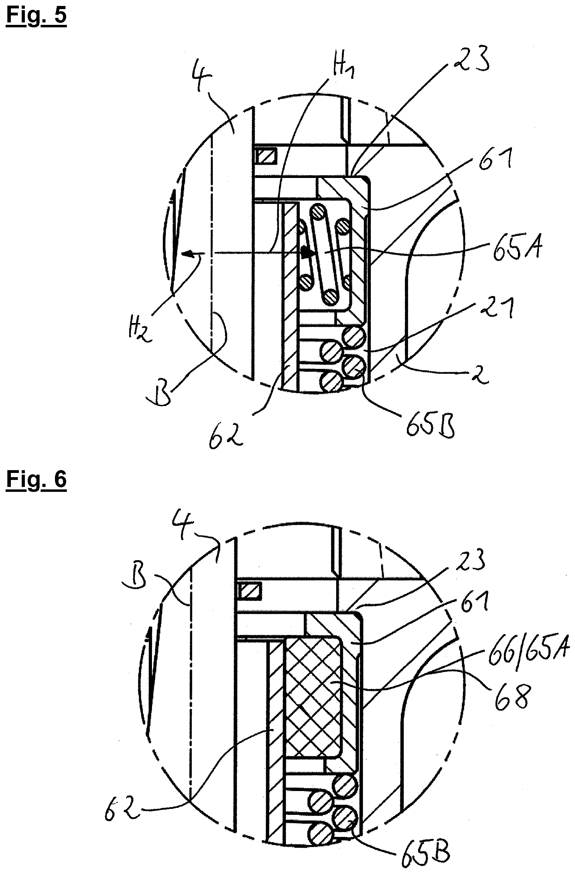

Die in Fig. 1 und Fig. 2 dargestellte, exemplarische Ausführungsform einer Spreizkeileinheit weist ein Gehäuse 2 mit einem ersten Gehäusebereich 21 und einem zweiten Gehäusebereich 22 auf. Der erste Gehäusebereich 21 ist dabei vorzugsweise im Wesentlichen zylinderförmig ausgeführt und erstreckt sich mit im wesentlichen konstantem Querschnitt entlang einer Betätigungsachse B. Die linke Hälfte der Figuren 1 und 2 zeigt dabei den Zustand der Spreizkeileinheit, bei welcher der Spreizkeil maximal aus dem zweiten Gehäusebereich 22 herausgefahren ist, also den nicht betätigten Zustand der Bremse. Die jeweils rechte Hälfte der Figuren zeigt den Zustand, in welchem der Spreizkeil maximal in den zweiten Gehäusebereich 22 eingefahren ist und somit die maximale Auslenkung der Kolbenelemente 8 und der an diesen abgestützten Bremsbacken erreicht. Als erstes Federelement 65A kommt ein Gummielement 66 zum Einsatz, welches zwischen dem ersten Führungsabschnitt 61 und dem zweiten Führungsabschnitt 62 angeordnet ist. Als zweites Federelement 65B dient eine Spiralfeder, die Windungen mit verschiedenem Durchmesser aufweist, damit sie wie auf der rechten Seite von Fig. 1 gezeigt, besonders kompakt im vollständig zusammengefederten Zustand ausgebildet ist. Dies wird dadurch erreicht, dass die Windungen dank ihrer unterschiedlichen Durchmesser ineinander geschoben werden können und somit ein besonders kurzes Baumaß der Feder in vollständig eingefedertem Zustand erreicht werden kann. Es kann auf diese Weise der Platzverlust, welcher durch die Führungseinheit 6 im ersten Bereich 21 des Gehäuses 2 auftritt, ausgeglichen werden und somit die erfindungsgemäße Spreizkeileinheit auch in bereits existierenden Bremsanlagen mit bestimmten Gehäuselängen eingesetzt werden. Fig. 2 zeigt, zusätzlich zu der in Fig. 1 gezeigten Darstellung, den verschwenkten Zustand des Spreizkeils 4, welcher gestrichelt dargestellt ist. Der Spreizkeil 4 ist dabei in der in den zweiten Gehäusebereich 22 eingefahrenen Position nach rechts verschwenkt dargestellt, wobei in diesem Zustand der Rückstellbereich 64 ein Drehmoment bzw. eine Kraft auf den Spreizkeil 4 überträgt, um diesen zurück in die in Fig. 1 gezeigte Stellung zu bringen. Bei dem in Fig. 2 gestrichelt dargestellten Zustand überwiegen jedoch die von den Kolbenelementen 8 auf den Spreizkeil 4 übertragenen Kräfte die Rückstellkraft des Rückstellbereiches 64. In Fig. 2 ist weiterhin mit einem Strichpunkt-Kreis gekennzeichnet, wo die in den Figuren 5-8 gezeigten Detailansichten bevorzugter Ausführungsformen der Führungseinheit 6 angeordnet sind. Bei dem auf der rechten Seite von Fig. 2 dargestellten vollständig in den zweiten Bereich 22 des Gehäuses 2 eingefahrenen Zustandes kann der Spreizkeil 4 um einen maximalen Schwenkwinkel von vorzugsweise 5° bis 10° verschwenkt werden, um der ungleichen Belastung der Kolbenelemente 8 durch das verschieden starke Anliegen an der Bremstrommel folgen zu können.

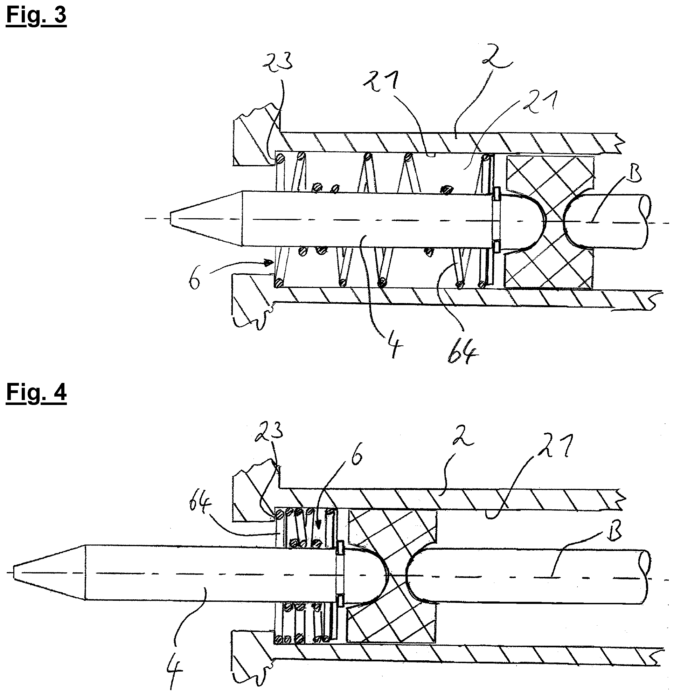

Fig. 3 zeigt eine weitere nicht erfindungsgemäße und exemplarische Ausführungsform, bei welcher der Rückstellbereich 64 als Spiralfeder ausgebildet ist, welche sowohl die Rückstellung des Bereiches parallel zur Betätigungsachse B übernimmt, als auch die quer zur Betätigungsachse B wirkende Abstützung. Der Rückstellbereich 64 weist dabei Bereiche mit großem Durchmesser auf, welche sich an der Innenseite des ersten Bereiches 21 des Gehäuses 2 abstützen. Weiterhin weist der Rückstellbereich 64 Windungen mit kleinem Durchmesser auf, welche ausgelegt sind, den Spreizkeil 4 mittels einer Passung mit möglichst kleinem Spiel zu führen und gegen Verlagerung quer zur Betätigungsachse und gegen Verschwenkung abstützen.

Fig. 4 zeigt die in Fig. 3 dargestellte Ausführungsform in dem Zustand, in dem der Spreizkeil möglichst vollständig in die Bremsanlage, d. h. in den nicht gezeigten zweiten Bereich 22 des Gehäuses 2 eingefahren ist. Gut zu erkennen ist dabei, dass die Spiralfeder durch die verschiedenen Durchmesser der Windungen besonders kompakt und im zusammengedrückten Zustand mit einer sehr kurzen Baulänge parallel zur Betätigungsachse B ausgelegt ist. Rechts vom Spreizkeil 4 ist, im Übrigen auch in den Figuren 1-3, ein Übertragungselement aus vorzugsweise Kunststoffmaterial vorgesehen, welches mit einer kalottenförmigen Öffnung den Spreizkeil 4 abstützt und auf seiner gegenüberliegenden Seite mit einer weiteren kalottenförmigen Öffnung den Eingriff des Betätigungsstößels eines Bremszylinders erlaubt. Es versteht sich, dass auch der Eingriff zwischen der Kalotte des Übertragungselements und dem Spreizkeil 4 eine Abstützung des Spreizkeils 4 quer zur Betätigungsachse B gewährleistet.

Fig. 5 zeigt den in Fig. 2 markierten Bereich einer vergrößerten Ansicht von Teilen der Führungseinheit 6, wobei in dieser bevorzugten Ausführungsform als Rückstellbereich 64 ein erstes Federelement 65A zum Einsatz gelangt, welches als Spiralfeder ausgebildet ist, die quer zur Betätigungsachse einfedert. Der erste Führungsabschnitt 61 und der zweite Führungsabschnitt 62 sind dabei jeweils als Hülsenelemente ausgebildet, wobei das erste Federelement 65A zwischen diesen Hülsenelementen, vorzugsweise Metallhülsen, angeordnet ist. Das erste Federelement 65A überträgt eine elastische Rückstellkraft zwischen dem ersten Führungsabschnitt 61 und dem zweiten Führungsabschnitt 62. Dabei stützt das erste Federelement den zweiten Führungsabschnitt 62 ab, wenn dieser eine Verlagerungsbewegung in Richtung der ersten Hauptrichtung H₁ relativ zum ersten Führungsabschnitt 61 durchführt. Mit anderen Worten versucht das erste Federelement 65A, den zweiten Führungsabschnitt 62 in Richtung der zweiten Hauptrichtung H₂ zu verlagern. Der als Metallhülse ausgebildete erste Führungsabschnitt 61 stützt sich dabei an einem Anschlag 23 des Gehäuses 2 ab. Weiterhin ist das in Fig. 1 und Fig. 2 gezeigte zweite Federelement 65B auch in dieser Ausführungsform vorgesehen.

Fig. 6 zeigt, alternativ zu der in Fig. 5 gezeigten Ausführungsform, als erstes Federelement 65A ein Gummielement 66. Das Gummielement 66 ist in dieser Ausführungsform vorzugsweise als homogenes, hohlzylinderförmiges Bauteil ausgebildet, welches zwischen dem ersten Führungsabschnitt 61 und dem zweiten Führungsabschnitt 62 angeordnet ist. In dieser Ausführungsform übernimmt das Gummielement 66 gleichzeitig auch die Funktion eines Dämpfungsteils 68.

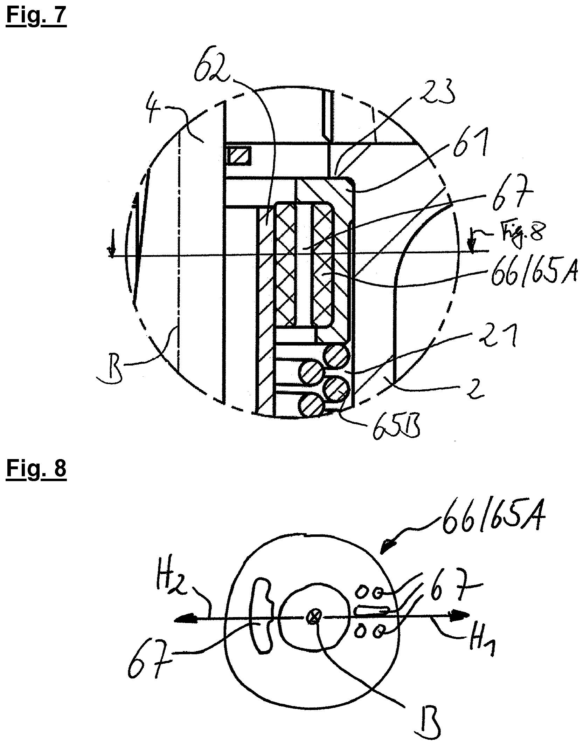

Fig. 7 zeigt eine weitere exemplarische Ausführungsform der Führungseinheit 6 mit dem Rückstellbereich 64, wobei der Rückstellbereich ebenfalls als Gummielement 66 ausgebildet ist, welches zumindest eine Aussparung 67 aufweist. Die Aussparung 67 im Material des Gummielements 66 reduziert die Federsteifigkeit entlang einer ersten Hauptrichtung H₁. Fig. 8 zeigt die in Fig. 7 gekennzeichnete Schnittansicht des ersten Federelements 65A, welches als Gummielement 66 ausgebildet ist. Dabei sind beispielhaft verschiedene Möglichkeiten dargestellt, wie Aussparungen 67 vorzugsweise am Gummielement 66 angeordnet und ausgebildet sind. Besonders bevorzugt reduzieren die Aussparungen 67 dabei die Federsteifigkeit entlang einer ersten Hauptrichtung H₁ und/oder entlang einer zweiten Hauptrichtung H₂, wobei in den Richtungen ausgehend von der Betätigungsachse B, in denen keine Aussparungen vorgesehen sind, die Federsteifigkeit höher ist, um dort eine straffere Führung des Spreizkeils 4 zu gewährleisten.

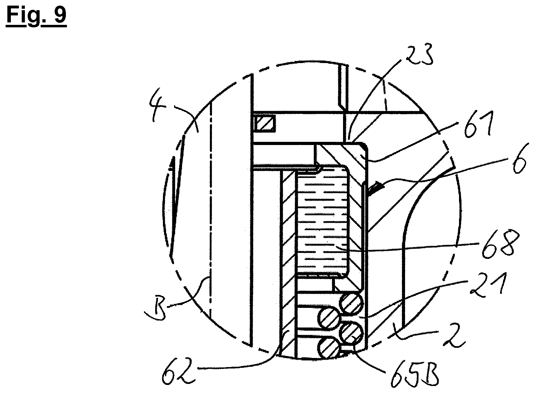

Fig. 9 schließlich zeigt eine weitere exemplarische Ausführungsform, bei welcher die Führungseinheit 6 einen Dämpfungsteil 68 aufweist. Der Dämpfungsteil 68 bei dieser in Fig. 9 dargestellten bevorzugten Ausführungsform ist als Hydrolager ausgebildet, wobei in Fig. 9 nicht dargestellt ist, dass mehrere Kammern vorgesehen sind, zwischen welchen eine Dämpfungsflüssigkeit, wie beispielsweise hochtemperaturfestes Hydrauliköl, einen Strömungswiderstand erzeugt, welcher Bewegungen des Spreizkeils 4 quer zur Betätigungsachse B dämpft. Es besteht beispielsweise die bevorzugte Möglichkeit, die Ausführungsform von Fig. 5, bei welcher eine Spiralfeder zwischen dem ersten und dem zweiten Führungsabschnitt 61, 62 angeordnet ist, mit der in Fig. 9 dargestellten Ausführungsform zu kombinieren, in dem zusätzlich zu dem ersten Federelement 65A auch ein Hydraulikfluid vorgesehen ist, welches Schwingungen und Bewegungen dämpft.

### Bezugszeichen:

| | | | |
|---|---|---|---|
| 2 | - Gehäuse | 65A | - erstes Federelement |
| 21 | - erster Gehäusebereich | 65B | - zweites Federelement |
| 22 | - zweiter Gehäusebereich | 66 | - Gummielement |
| 23 | - Anschlag | 67 | - Aussparungen |
| 4 | - Spreizkeil | 68 | - Dämpfungsteil |
| 6 | - Führungseinheit | 8 | - Kolbenelement |
| 61 | - erster Führungsabschnitt | B | - Betätigungsachse |
| 62 | - zweiter Führungsabschnitt | H₁ | - erste Hauptrichtung |
| 64 | - Rückstellbereich | H₂ | - zweite Hauptrichtung |
| 65 | - Spiralfeder | | |

## Patentansprüche

1. Spreizkeileinheit, umfassend ein Gehäuse (2), einen Spreizkeil (4) und eine Führungseinheit (6),
wobei die Führungseinheit (6) und der Spreizkeil (4) in einem ersten Gehäusebereich (21) des Gehäuses (2) anordenbar sind,
wobei sich die Führungseinheit (6) mit einem ersten Führungsabschnitt (61) an einer Wand des ersten Gehäusebereiches (21) derart abstützt, dass sie gegen Verlagerung und Verschwenken relativ zum Gehäuse (2) quer zu einer Betätigungsachse (B) gesichert ist,
wobei der Spreizkeil (4) in einem zweiten Führungsabschnitt (62) der Führungseinheit (6) geführt ist,
wobei zwischen dem ersten Führungsabschnitt (61) und dem zweiten Führungsabschnitt (62) ein Rückstellbereich (64) vorgesehen ist, welcher eine gefederte Relativbewegung zwischen dem ersten Führungsabschnitt (61) und dem zweiten Führungsabschnitt (62) erlaubt,
wobei der Rückstellbereich (64) ein Gummielement (66) aufweist,
wobei das Gummielement (66) hohlzylinderförmig ausgebildet ist,
**dadurch gekennzeichnet, dass** der erste Führungsabschnitt (61) die äußere Mantelfläche des Gummielements (66) ist und wobei der zweite Führungsabschnitt (62) die innere Mantelfläche des Gummielements (66) ist.

2. Spreizkeileinheit nach Anspruch 1,
wobei der Spreizkeil (4) im zweiten Führungsabschnitt (62) gleitend und längs der Betätigungsachse (B) verlagerbar gehalten ist.

3. Spreizkeileinheit nach einem der vorhergehenden Ansprüche,
wobei der Rückstellbereich ein Verlagern des Spreizkeils (4) quer zur Betätigungsachse (B) in einer ersten Hauptrichtung (H₁) und/oder in einer zweiten Hauptrichtung (H₂) mit einer geringeren Federkonstante abfedert, als in den übrigen quer zur Betätigungsachse (B) stehenden Richtungen.

4. Spreizkeileinheit nach Anspruch 3,
wobei die Federsteifigkeit entlang der ersten Hauptrichtung (H₁) und/oder der zweiten Hauptrichtung (H₂) kleiner als ein 0,8-faches, vorzugsweise kleiner als die Hälfte der Federsteifigkeit der Materialbereiche ist, welche den Spreizkeil (4) bei Verlagerung quer zur Betätigungsachse (B) im Bereich der Führungseinheit (6) in quer zur ersten und zur zweiten Hauptrichtung (H₁, H₂) stehenden Richtungen mit einer Gegenkraft beaufschlagen.

5. Spreizkeileinheit nach Anspruch 4,
wobei das Gummielement (66) Aussparungen (67) aufweist, welche die Federsteifigkeit in der ersten Hauptrichtung (H₁) und/oder der zweiten Hauptrichtung (H2) verringern.

6. Spreizkeileinheit nach einem der vorhergehenden Ansprüche,
wobei das Gehäuse (2) einen zweiten Gehäusebereich (22) aufweist, in welchem zwei Kolbenelemente (8) quer zur Betätigungsachse (B) verlagerbar und geführt angeordnet sind,
wobei die Kolbenelemente (8) ausgelegt sind, eine Kraft vom Spreizkeil (4) an je ein Bremsbackenelement zu übertragen.

## Claims

1. An expansion wedge unit comprising a housing (2), an expansion wedge (4) and a guide unit (6),
wherein the guide unit (6) and the expansion wedge (4) can be arranged in a first housing region (21) of the housing (2),
wherein the guide unit (6) rests with a first guide portion (61) on a wall of the first housing region (21) such that it is secured against displacement and pivoting relative to the housing (2) transversely to an actuation axis (B),
wherein the expansion wedge (4) is guided in a second guide portion (62) of the guide unit (6),
wherein a reset region (64) is provided between the first guide portion (61) and the second guide portion (62) and allows a sprung relative movement between the first guide portion (61) and the second guide portion (62),
wherein the reset region (64) comprises a rubber element (66), wherein the rubber element (66) is configured as a hollow cylinder, **characterized in that**
the first guide portion (61) is the outer casing surface of the rubber element (66) and wherein the second guide portion (62) is the inner casing surface of the rubber element (66).

2. The expansion wedge unit as claimed in claim 1,
wherein the expansion wedge (4) is held so as to slide in the second guide portion (62) and be displaceable along the actuation axis (B).

3. The expansion wedge unit as claimed in any of the preceding claims, wherein the reset region damps a displacement of the expansion wedge (4) transversely to the actuation axis (B) in a first main direction (H₁) and/or in a second main direction (H₂) with a lower spring constant than in the other directions standing transversely to the actuation axis (B).

4. The expansion wedge unit as claimed in claim 3,
wherein the spring stiffness in the first main direction (H₁) and/or the second main direction (H₂) is less than 0.8 times, preferably less than half the spring stiffness of the material regions which load the expansion wedge (4) with a counter-force on displacement transversely to the actuation axis (B) in the region of the guide unit (6), in directions standing transversely to the first and second main directions (H₁, H₂).

5. The expansion wedge unit as claimed in claim 4,
wherein the rubber element (66) has cutouts (67) which reduce the spring stiffness in the first main direction (H₁) and/or the second main direction (H₂).

6. The expansion wedge unit as claimed in any of the preceding claims, wherein the reset region (64) comprises a coil spring (65),
wherein along the actuation axis (B), the coil spring (65) has different diameters relative to the actuation axis (B),
wherein at least one region with minimal diameter supports the expansion wedge (4) transversely to the actuation axis (B),
wherein at least one region with maximal diameter supports the coil spring (65) on the first housing region (21).

## Revendications

1. Unité à cale d'écartement comprenant un boîtier (2), une cale d'écartement (4) et une unité de guidage (6),
dans laquelle
l'unité de guidage (6) et la cale d'écartement (4) peuvent être disposées dans une première zone (21) du boîtier (2),
l'unité de guidage (6) s'appuie avec une première portion de guidage (61) contre une paroi de la première zone de boîtier (21) de manière à être bloquée à l'encontre d'un déplacement et d'un pivotement par rapport au boîtier (2) transversalement à un axe d'actionnement (B),
la cale d'écartement (4) est guidée dans une deuxième portion de guidage (62) de l'unité de guidage (6),
une zone de rappel (64) est prévue entre la première portion de guidage (61) et la deuxième portion de guidage (62), zone qui permet un mouvement relatif avec effet de ressort entre la première portion de guidage (61) et la deuxième portion de guidage (62),
la zone de rappel (64) comprend un élément en caoutchouc (66),
l'élément en caoutchouc (66) est réalisé en forme de cylindre creux, **caractérisée en ce que**
la première portion de guidage (61) est la surface enveloppe extérieure de l'élément en caoutchouc (66), et la deuxième portion de guidage (62) est la surface enveloppe intérieure de l'élément en caoutchouc (66).

2. Unité à cale d'écartement selon la revendication 1,
dans laquelle
la cale d'écartement (4) est maintenue de manière à coulisser dans la deuxième portion de guidage (62) et à pouvoir se déplacer le long de l'axe d'actionnement (B).

3. Unité à cale d'écartement selon l'une des revendications précédentes, dans laquelle
la zone de rappel amortit avec effet de ressort un déplacement de la cale d'écartement (4) transversalement à l'axe d'actionnement (B) dans une première direction principale (H₁) et/ou dans une deuxième direction principale (H₂) avec une constante de rappel plus faible que celle dans les autres directions transversales à l'axe d'actionnement (B).

4. Unité à cale d'écartement selon la revendication 3,
dans laquelle
la rigidité élastique le long de la première direction principale (H₁) et/ou de la deuxième direction principale (H₂) est inférieure à 0,8 fois, de préférence inférieure à la moitié, de la rigidité élastique des zones de matériau qui, lors du déplacement transversalement à l'axe d'actionnement (B) dans la zone de l'unité de guidage (6), sollicitent la cale d'écartement (4) avec une force antagoniste dans des directions transversales à la première et à la deuxième direction principale (H₁, H₂).

5. Unité à cale d'écartement selon la revendication 4,
dans laquelle
l'élément en caoutchouc (66) présente des échancrures (67) qui réduisent la rigidité élastique dans la première direction principale (H₁) et/ou dans la deuxième direction principale (H₂).

6. Unité à cale d'écartement selon l'une des revendications précédentes, dans laquelle
le boîtier (2) présente une deuxième zone de boîtier (22) dans laquelle deux éléments de piston (8) sont disposés de manière à pouvoir être déplacés et guidés transversalement à l'axe d'actionnement (B),
les éléments de piston (8) sont conçus pour transmettre une force de la cale d'écartement (4) à un élément de mâchoire de frein respectif.
